# EUROPEAN PATENT APPLICATION

(11) **EP 4 804 466 A1**
(43) Date of publication of application: **09.09.2026**
(21) Application number: 24885331.9
(22) Date of filing: 30.09.2024
(51) Int. Cl.: H04L 12/28, H04L 61/5038

(54) **TERMINAL DEVICE AND COMMUNICATION SYSTEM**

(30) Priority: 02.11.2023 JP 2023188519
(71) Applicant: PANASONIC INTELLECTUAL PROPERTY MANAGEMENT CO., LTD., Kadoma-shi, Osaka 571-0057 (JP)
(72) Inventor: SAKAMOTO Mitsuhiro, Osaka 571-0057 (JP)
(74) Representative: SSM Sandmair
(86) International application number: PCT/JP2024/034866
(87) International publication number: WO 2025/094554

(57) **Abstract**

Even when a failure occurs in a predetermined terminal device among the plurality of terminal devices, a communication address is set to a next terminal device connected to the predetermined terminal device. Terminal device (10) is a terminal device in which a communication address is set. Terminal device 10 includes communication terminal (Pa, Pb) to and from which communication signals for communicating with the management device are input and output, communication circuit part (60) connected to communication terminal (Pa, Pb), input terminal (E1) and output terminal (E2), controller (50), and diode (81) disposed on a path connecting input terminal (E1) and output terminal (E2). Controller (50) is connected to each of communication circuit part (60), input terminal (E1), and output terminal (E2), controls an operation of communication circuit part (60) based on a signal input to input terminal (E1), and then outputs a predetermined signal via output terminal (E2).

## Description

### TECHNICAL FIELD

The present disclosure relates to a terminal device for which a communication address is set, and a communication system including the terminal device.

### BACKGROUND ART

Conventionally, a communication system including a plurality of terminal devices and a management device that controls the plurality of terminal devices is known. In such a communication system, by setting a communication address for each of the plurality of terminal devices, it is possible to individually control each terminal device by using the management device. PTL 1 discloses a communication system in which a management device and a plurality of terminal devices are daisy-chain connected.

### Citation List

### Patent Literature

PTL 1: US 2010/0274945 A

### SUMMARY OF THE INVENTION

In a conventional communication system, when a communication address is not set to a predetermined terminal device among a plurality of terminal devices, it is configured such that the management device and a next terminal device connected to the predetermined terminal device cannot communicate with each other, and the management device and the next terminal device can communicate with each other after the communication address is set to the predetermined terminal device. However, the conventional communication system has a problem that, for example, when a failure occurs in a control circuit of a predetermined terminal device, a communication address cannot be set to a next terminal device.

The present disclosure provides a terminal device configured to be able to set a communication address to another terminal device different from a predetermined terminal device even when a failure occurs in the predetermined terminal device among a plurality of terminal devices, and a communication system including the terminal device.

A terminal device according to one aspect of the present disclosure is a terminal device to which a communication address is set, and includes: a communication terminal to and from which a communication signal for communicating with a management device is input and output; a communication circuit part connected to the communication terminal; an input terminal and an output terminal; a controller; and a diode or a transistor disposed on a path connecting the input terminal and the output terminal. The controller is connected to each of the communication circuit part, the input terminal, and the output terminal, controls operation of the communication circuit part based on a signal input to the input terminal, and then outputs a predetermined signal via the output terminal.

A communication system according to another aspect of the present disclosure is a communication system including: a plurality of terminal devices each of which is the terminal device of the above aspect; and the management device, in which the plurality of terminal devices includes at least a first terminal device, a second terminal device, and a third terminal device each of which is the terminal device, and is bus-connected to the management device via the respective communication terminals of the first terminal device, the second terminal device, and the third terminal device. The input terminal of the first terminal device is connected to the management device. The output terminal of the first terminal device is connected to the input terminal of the second terminal device. The output terminal of the second terminal device is connected to the input terminal of the third terminal device.

According to the terminal device and the communication system of the present disclosure, even when a failure occurs in a predetermined terminal device among the plurality of terminal devices, the communication address can be set to another terminal device different from the predetermined terminal device.

### BRIEF DESCRIPTION OF THE DRAWINGS

Fig. 1 is a diagram illustrating a schematic configuration of a communication system according to an exemplary embodiment.
Fig. 2 is a diagram illustrating a circuit configuration of a terminal device according to the exemplary embodiment.
Fig. 3 is a diagram illustrating a connection relationship among a plurality of terminal devices included in a communication system.
Fig. 4 is a diagram illustrating a relationship among a potential of an input terminal, an output of a logic circuit, presence/absence of a drive voltage output from a linear regulator, and communication possibility of a transceiver IC.
Fig. 5 is a diagram illustrating a relationship among a state of setting a communication address, a state of a voltage signal switching circuit, a potential of an output terminal, and a potential of an input terminal of a next terminal device.
Fig. 6 is a diagram illustrating a setting example of a communication address of the terminal device according to the exemplary embodiment.
Fig. 7 is a diagram illustrating a circuit configuration of a terminal device according to a first modification of the exemplary embodiment.
Fig. 8 is a diagram illustrating a circuit configuration of a terminal device according to a second modification of the exemplary embodiment.
Fig. 9 is a diagram illustrating a circuit configuration of a terminal device according to a third modification of the exemplary embodiment.

### DESCRIPTION OF EMBODIMENT

Hereinafter, exemplary embodiments will be specifically described with reference to the drawings. The exemplary embodiments described below each illustrate a specific example of the present disclosure. Numerical values, shapes, materials, components, arrangement positions and connection modes of the components, steps, order of the steps, and the like shown in the following exemplary embodiments are merely examples, and are not intended to limit the present disclosure. Further, among the components in the following exemplary embodiments, components that are not described in independent claims indicating an implementation according to an embodiment of the present disclosure are described as arbitrary components. Implementations of the present disclosure are not limited to the current independent claims, but may also be expressed by other independent claims.

Each of the drawings is a schematic view and is not necessarily exactly illustrated. In all the drawings, substantially the same components are denoted by the same reference numerals, and redundant description may be omitted or simplified.

### (Exemplary embodiment)

### [Schematic configuration of communication system]

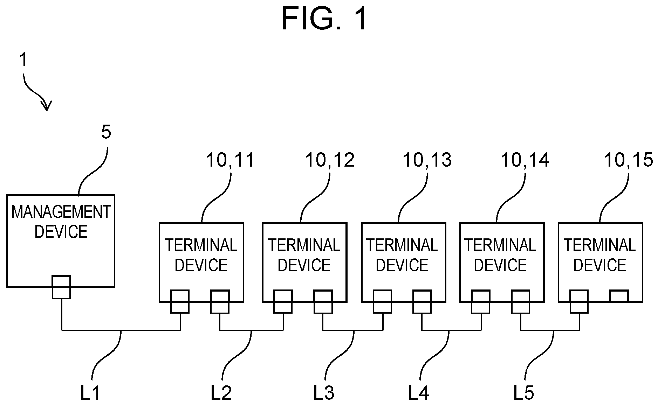

A schematic configuration of a communication system according to an exemplary embodiment will be described with reference to Fig. 1.

Fig. 1 is a diagram illustrating a schematic configuration of communication system 1 according to an exemplary embodiment.

As illustrated in Fig. 1, communication system 1 includes management device 5 and a plurality of terminal devices 11, 12, 13, 14, and 15. In Fig. 1, a power supply line for supplying power to each of management device 5 and terminal devices 11 to 15 is not illustrated.

Management device 5 is a device that controls the plurality of terminal devices 11 to 15, and is, for example, a master controller. The plurality of terminal devices 11 to 15 are devices that operate on the basis of a control signal output from management device 5, and are, for example, drive devices such as a motor, or electric devices such as an air conditioner, a lighting device, an imaging device, a display, and a communication device.

Management device 5 and the plurality of terminal devices 11 to 15 are daisy-chain connected by a plurality of feed wirings L1 to L5. Each of feed wirings L1 to L5 is, for example, a cable with connector having a plurality of communication lines. In this example, management device 5 and terminal device 11 are connected by feed wiring L1, terminal device 11 and terminal device 12 are connected by feed wiring L2, terminal device 12 and terminal device 13 are connected by feed wiring L3, terminal device 13 and terminal device 14 are connected by feed wiring L4, and terminal device 14 and terminal device 15 are connected by feed wiring L5.

In this manner, in communication system 1, terminal devices 11, 12, 13, 14, and 15 are connected in this order downstream from management device 5 in the communication path starting from management device 5.

A communication address for bus communication with management device 5 is set for each of terminal devices 11 to 15. The communication address is an address for communication allocated from management device 5 to each of terminal devices 11 to 15. In the present exemplary embodiment, the communication address of each of terminal devices 11 to 15 is set by using management device 5, terminal devices 11 to 15, and feed wirings L1 to L5.

Hereinafter, some or all of the plurality of terminal devices 11 to 15 may be referred to as terminal device 10. The number of the plurality of terminal devices 10 is not limited to five, and may be two or more and four or less, or six or more. The connection order of the plurality of terminal devices 11 to 15 may be determined in advance.

### [Configuration of terminal device]

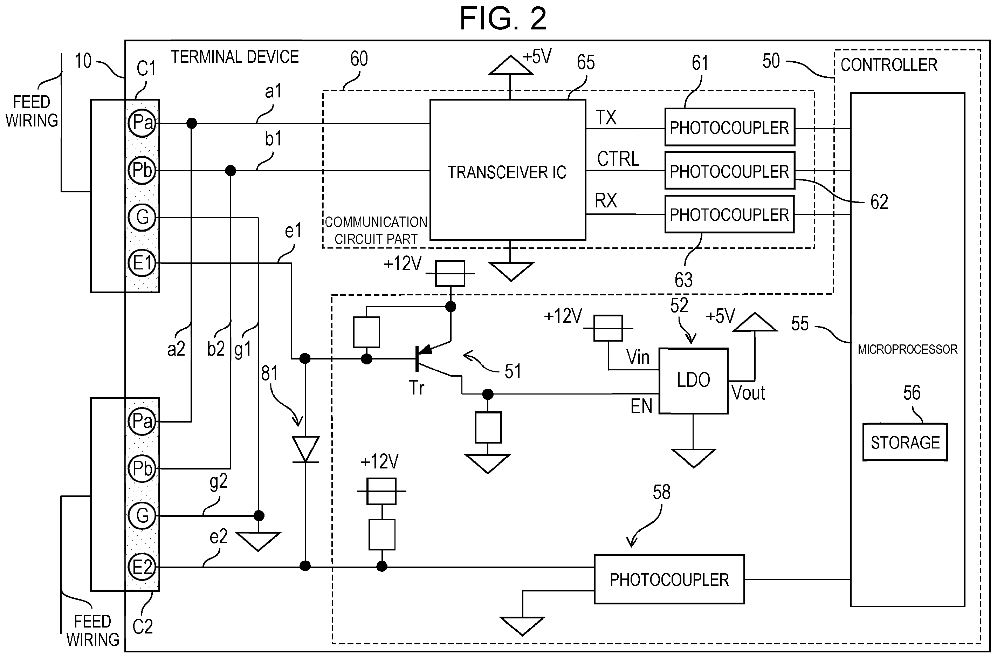

A configuration of a terminal device according to an exemplary embodiment will be described with reference to Figs. 2 to 5.

Fig. 2 is a diagram illustrating a circuit configuration of terminal device 10 according to the exemplary embodiment.

As illustrated in Fig. 2, terminal device 10 includes connectors C1 and C2 respectively connected to two feed wirings, communication circuit part 60, controller 50, and diode 81 that can be a bypass circuit.

Controller 50 controls the device body and communication circuit part 60 of terminal device 10. For example, controller 50 is connected to each of communication circuit part 60, input terminal E1 of connector C1, and output terminal E2 of connector C2. Controller 50 controls the operation of communication circuit part 60 on the basis of the signal input to input terminal E1. After controlling the operation of communication circuit part 60, controller 50 outputs a predetermined signal via output terminal E2.

Controller 50 includes logic circuit 51, linear regulator (LDO: Low Dropout) 52, microprocessor 55, and voltage signal switching circuit 58. A detailed configuration of controller 50 will be described later.

Communication circuit part 60 includes transceiver integrated circuit (transceiver IC) 65 and a plurality of photocouplers 61, 62, and 63. Photocoupler 61 has one end connected to a transmission terminal of transceiver IC 65 and the other end connected to microprocessor 55. Photocoupler 62 has one end connected to a control terminal of transceiver IC 65 and the other end connected to microprocessor 55. Photocoupler 63 has one end connected to a reception terminal of transceiver IC 65 and the other end connected to microprocessor 55.

Transceiver IC 65 is an integrated circuit (IC) for performing communication between management device 5 and the plurality of terminal devices 11 to 15, and performs bus communication on the basis of a communication standard such as RS485, for example. Transceiver IC 65 receives the communication data output from management device 5 and outputs the communication data to microprocessor 55 via photocoupler 63. In addition, transceiver IC 65 receives a signal output from microprocessor 55 via photocoupler 61 and transmits the signal to management device 5. Transmission and reception by transceiver IC 65 are switched by a control signal input from microprocessor 55 to transceiver IC 65 via photocoupler 62.

Each of connectors C1 and C2 is, for example, a receptacle connector, and is fixed to the device body of terminal device 10. Connector C1 includes communication terminals Pa and Pb, ground terminal G, and input terminal E1. Connector C2 includes communication terminals Pa and Pb, ground terminal G, and output terminal E2.

Communication terminals Pa, Pb are a pair of terminals for differential signals used when terminal device 10 performs bus communication with management device 5. Communication signals (specifically, differential signals) for communicating with the outside are input to and output from communication terminals Pa, Pb. Communication terminals Pa, Pb are connected to transceiver IC 65 via internal wiring of terminal device 10.

For example, communication terminal Pa of connector C1 is connected to transceiver IC 65 via one internal wiring a1 electrically connected to communication terminal Pa, and is connected to communication terminal Pa of connector C2 via other internal wiring a2 electrically connected to communication terminal Pa. Communication terminal Pb of connector C1 is connected to transceiver IC 65 via one internal wiring b1 electrically connected to communication terminal Pb, and is connected to communication terminal Pb of connector C2 via other internal wiring b2 electrically connected to communication terminal Pb.

The communication data output from management device 5 is transmitted to transceiver IC 65 via the feed wiring, communication terminals Pa, Pb of connector C1, and one internal wiring a1, b1. The communication data output from management device 5 is transmitted to communication terminals Pa, Pb of connector C2 through the feed wiring, communication terminals Pa, Pb of connector C1, and the other internal wirings a2, b2.

Ground terminal G is a terminal connected to a ground line in feed wirings L1 to L5, and is set to the ground potential. For example, ground terminal G of connector C1 is connected to the signal ground via one internal wiring g1 electrically connected to ground terminal G, and is connected to ground terminal G of connector C2 via other internal wiring g2 electrically connected to ground terminal G.

Input terminal E1 and output terminal E2 are terminals used for setting a communication address of terminal device 10. Each of input terminal E1 and output terminal E2 is connected to controller 50 via an internal wiring of terminal device 10.

For example, input terminal E1 is connected to each of controller 50 and diode 81 via internal wiring e1 electrically connected to input terminal E1. Output terminal E2 is connected to each of controller 50 and diode 81 via internal wiring e2 electrically connected to output terminal E2. Diode 81 is an example of a semiconductor element having a pn junction.

As illustrated in Fig. 2, the anode of diode 81 is connected to input terminal E1, and the cathode is connected to output terminal E2. That is, diode 81 is disposed on a path connecting input terminal E1 and output terminal E2, and is connected in parallel to controller 50.

Here, a connection relationship between input terminal E1 and output terminal E2 of the plurality of terminal devices 10 included in communication system 1 will be specifically described.

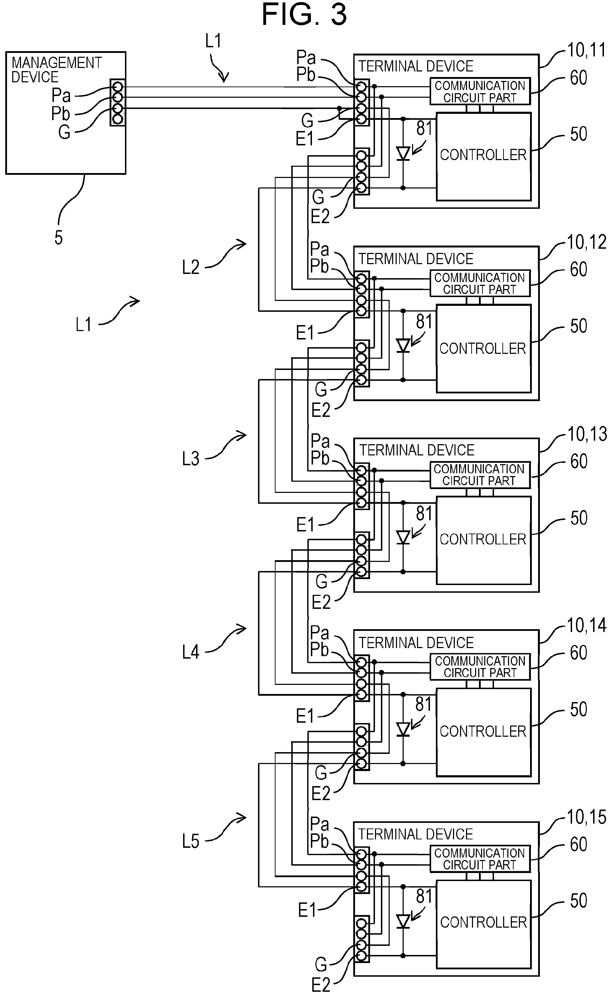

Fig. 3 is a diagram illustrating a connection relationship among a plurality of terminal devices 10 included in communication system 1.

As illustrated in Fig. 3, management device 5 is connected to input terminal E1 of connector C1 of terminal device 11 via feed wiring L1. Ground terminal G of management device 5 is connected to both ground terminal G and input terminal E1 of terminal device 11.

Terminal device 11 is a first terminal device closest to management device 5 in a communication path starting from management device 5. Input terminal E1 and output terminal E2 of terminal device 11 are connected to controller 50 of terminal device 11. Diode 81 is disposed on a path connecting input terminal E1 and output terminal E2. Output terminal E2 of terminal device 11 is connected to input terminal E1 of terminal device 12 via feed wiring L2.

Terminal device 12 is a second terminal device second closest to management device 5 in the communication path starting from management device 5. Input terminal E1 and output terminal E2 of terminal device 12 are connected to controller 50 of terminal device 12. Diode 81 is disposed on a path connecting input terminal E1 and output terminal E2. Output terminal E2 of terminal device 12 is connected to input terminal E1 of terminal device 13 via feed wiring L3.

Terminal device 13 is a third terminal device third closest to management device 5 in the communication path starting from management device 5. Input terminal E1 and output terminal E2 of terminal device 13 are connected to controller 50 of terminal device 13. Diode 81 is disposed on a path connecting input terminal E1 and output terminal E2. Output terminal E2 of terminal device 13 is connected to input terminal E1 of terminal device 14 via feed wiring L4.

Terminal device 14 is a fourth terminal device fourth closest to management device 5 in the communication path starting from management device 5. Input terminal E1 and output terminal E2 of terminal device 14 are connected to controller 50 of terminal device 14. Diode 81 is disposed on a path connecting input terminal E1 and output terminal E2. Output terminal E2 of terminal device 14 is connected to input terminal E1 of terminal device 15 via feed wiring L5.

Terminal device 15 is a terminal device at a terminal end farthest from management device 5 in a communication path starting from management device 5. Input terminal E1 and output terminal E2 of terminal device 15 are connected to controller 50 of terminal device 15. Diode 81 is disposed on a path connecting input terminal E1 and output terminal E2. A termination resistor may be connected to output terminal E2 of terminal device 15.

As described above, in the plurality of terminal devices 10 included in communication system 1, management device 5 is connected to input terminal E1 of terminal device 10 closest to management device 5, and output terminal E2 of terminal device 10 is connected to input terminal E1 of next terminal device 10 on the downstream side of terminal device 10 closest to management device 5.

Controller 50 sets the communication address as its own communication address by receiving the communication address transmitted from management device 5 to terminal device 10. Hereinafter, configurations of controller 50, communication circuit part 60, input terminal E1, and output terminal E2 for setting the communication address will be described.

As illustrated in Fig. 2, controller 50 is connected to each of communication circuit part 60, input terminal E1, and output terminal E2. A voltage signal that permits or prohibits the setting of the communication address is input to input terminal E1. The voltage signal input to input terminal E1 is transmitted to controller 50 via internal wiring e1. Controller 50 sets the communication address of terminal device 10 based on the voltage signal input to input terminal E1.

For example, controller 50 operates communication circuit part 60 in a case where the input voltage signal is a voltage signal that permits setting of the communication address. Controller 50 does not operate communication circuit part 60 when the input voltage signal is a voltage signal that prohibits the setting of the communication address.

The voltage signal that prohibits setting of the communication address is a signal indicating a predetermined logic state having a predetermined voltage value. The predetermined voltage value is, for example, 12 V. The voltage signal that permits setting of the communication address is a signal indicating a logic state inverted from the predetermined logic state, and has a voltage value lower than the predetermined voltage value. The voltage value lower than the predetermined voltage value is, for example, a ground potential or 0 V.

Hereinafter, a signal that prohibits the setting of the communication address and indicates a predetermined logic state is referred to as a high (High) signal, and a signal that permits the setting of the communication address and indicates a logic state inverted from the predetermined logic state is referred to as a low (Low) signal.

Controller 50 controls communication possibility of communication circuit part 60 by switching presence or absence of supply of a drive voltage to transceiver IC 65 of communication circuit part 60 on the basis of a voltage signal input via input terminal E1.

As described above, controller 50 includes logic circuit 51, linear regulator 52, microprocessor 55, and voltage signal switching circuit 58.

Logic circuit 51 is, for example, a logic inversion circuit including a bipolar transistor such as PNP transistor Tr. The emitter of PNP transistor Tr is connected to a predetermined voltage source (12V), and the base is connected to input terminal E1. The base and the emitter are connected to each other via a resistance element. The collector of PNP transistor Tr is connected to the ground via the resistance element, and is connected to enable terminal EN of linear regulator 52.

The voltage input part (Vin) of linear regulator 52 is connected to a predetermined voltage source (12V), and the voltage output part (Vout) is connected to transceiver IC 65. Enable terminal EN of linear regulator 52 is connected to logic circuit 51. Linear regulator 52 supplies a drive voltage (5V) for driving transceiver IC 65 to transceiver IC 65. Transceiver IC 65 becomes communicable when the drive voltage is supplied, and becomes uncommunicable when the drive voltage is not supplied. The voltage value of the drive voltage is different from the voltage value of the predetermined voltage source described above, and is set to a value lower than the voltage value of the predetermined voltage source.

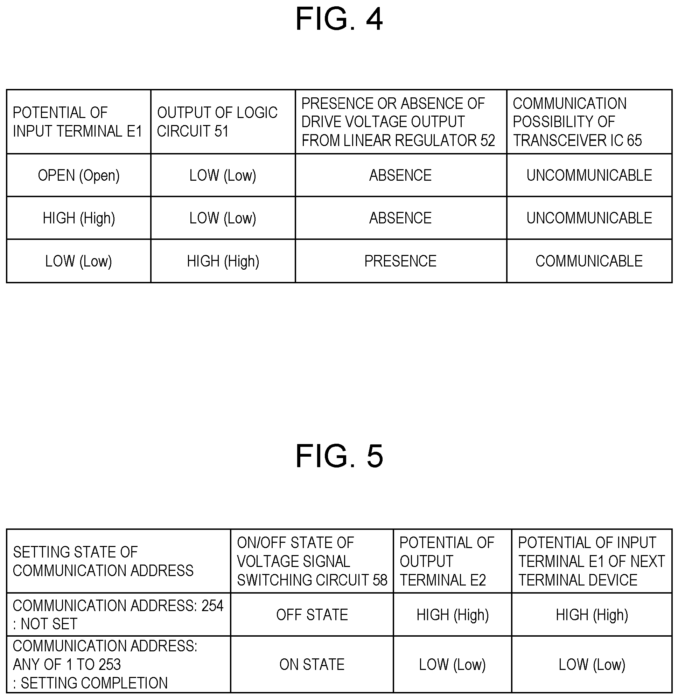

Fig. 4 is a diagram illustrating a relationship among the potential of input terminal E1, the output of logic circuit 51, the presence or absence of the drive voltage output from linear regulator 52, and the communication possibility of transceiver IC 65. The drawing also illustrates the presence or absence of the connection state of input terminal E1.

For example, when the connection state of input terminal E1 is open or the potential is high, the output of logic circuit 51 is low. As a result, the drive voltage is not output from linear regulator 52 to transceiver IC 65, and communication circuit part 60 becomes uncommunicable. That is, in terminal device 10, the communication address cannot be set.

On the other hand, when the potential of input terminal E1 is low, the output of logic circuit 51 is high. As a result, the drive voltage is output from linear regulator 52 to transceiver IC 65, and communication circuit part 60 becomes communicable. That is, in terminal device 10, the communication address can be set.

Controller 50 controls communication possibility of communication circuit part 60 as described above. Controller 50 acquires the communication address transmitted from management device 5 via communication circuit part 60, and sets the acquired communication address as the communication address of terminal device 10. The communication address set by controller 50 is stored in storage 56. Storage 56 includes a non-volatile storage device such as a flash memory, and the communication address is held in storage 56 even after terminal device 10 is powered off.

Controller 50 controls communication circuit part 60 to set the communication address, and then outputs a predetermined signal via output terminal E2. Specifically, controller 50 outputs a predetermined voltage signal from output terminal E2 using voltage signal switching circuit 58.

Voltage signal switching circuit 58 is a circuit that switches the voltage signal output from output terminal E2, and includes, for example, a photocoupler. The light emitting element of the photocoupler constituting voltage signal switching circuit 58 is connected to microprocessor 55. The light receiving element of the photocoupler constituting voltage signal switching circuit 58 has one end connected to output terminal E2 and the other end connected to the ground. A voltage source having a predetermined voltage value (12V) is connected to a path connecting one end of the light receiving element of the photocoupler and output terminal E2 via a resistance element. Controller 50 switches the voltage signal output from output terminal E2 using voltage signal switching circuit 58.

Fig. 5 is a diagram illustrating a relationship among a setting state of the communication address, an on/off state of the voltage signal switching circuit, a potential of output terminal E2, and a potential of input terminal E1 of next terminal device 10.

In the figure, a case where the communication address is "254" indicates a state in which the setting of the communication address is not completed, and a case where the communication address is any number between "1 to 253" indicates a state in which the setting of the communication address is completed. In this example, a communication address of "254" is set to terminal device 10 in the initial state at the time of product shipment or the like. Before an individual communication address is set to terminal device 10, terminal device 10 communicates with management device 5 using a communication address of "254", and acquires the individual communication address transmitted from management device 5. Note that the number "254" indicating a state in which the setting of the communication address is not completed is merely an example, and may be another number.

When the setting of the communication address has not been performed on terminal device 10, that is, when the setting of the communication address has not been completed, microprocessor 55 turns off voltage signal switching circuit 58. When voltage signal switching circuit 58 is in an off state, the potential of output terminal E2 becomes high by a predetermined voltage source (12V). As a result, a high signal is output from output terminal E2, and the potential of input terminal E1 of next terminal device 10 becomes high. That is, in next terminal device 10, the communication address cannot be set.

On the other hand, when the setting of the communication address of terminal device 10 is completed, microprocessor 55 turns on voltage signal switching circuit 58. When voltage signal switching circuit 58 is in the on state, the potential of output terminal E2 becomes low. As a result, a low signal is output from output terminal E2, and the potential of input terminal E1 of next terminal device 10 becomes low. That is, in next terminal device 10, the communication address can be set.

In terminal device 10, voltage signal switching circuit 58 and logic circuit 51 are connected via diode 81. Therefore, in a case where the setting of the communication address is completed, when the potential becomes low in the ON state of voltage signal switching circuit 58, the input voltage of logic circuit 51 becomes low through diode 81, and controller 50 can operate communication circuit part 60. Therefore, even if a problem such as a failure in turning on the power of terminal device 10 in the preceding stage (upstream side) occurs and a signal is not input to input terminal E1, communication with management device 5 can be performed via terminal device 10 in the preceding stage. As a result, for example, even if a failure occurs in a predetermined terminal device among the plurality of terminal devices 10, it is possible to communicate with the next terminal device connected to the predetermined terminal device.

That is, when the setting of the communication address is completed, controller 50 outputs a voltage signal permitting the setting of the communication address via output terminal E2. When the setting of the communication address has not been completed, controller 50 outputs a voltage signal that prohibits the setting of the communication address via output terminal E2. Controller 50 of each terminal device 10 controls whether or not to set the communication address in next terminal device 10 as described above, so that the communication addresses of the plurality of terminal devices 10 are sequentially set one by one from the upstream to the downstream.

### [Setting example of communication address]

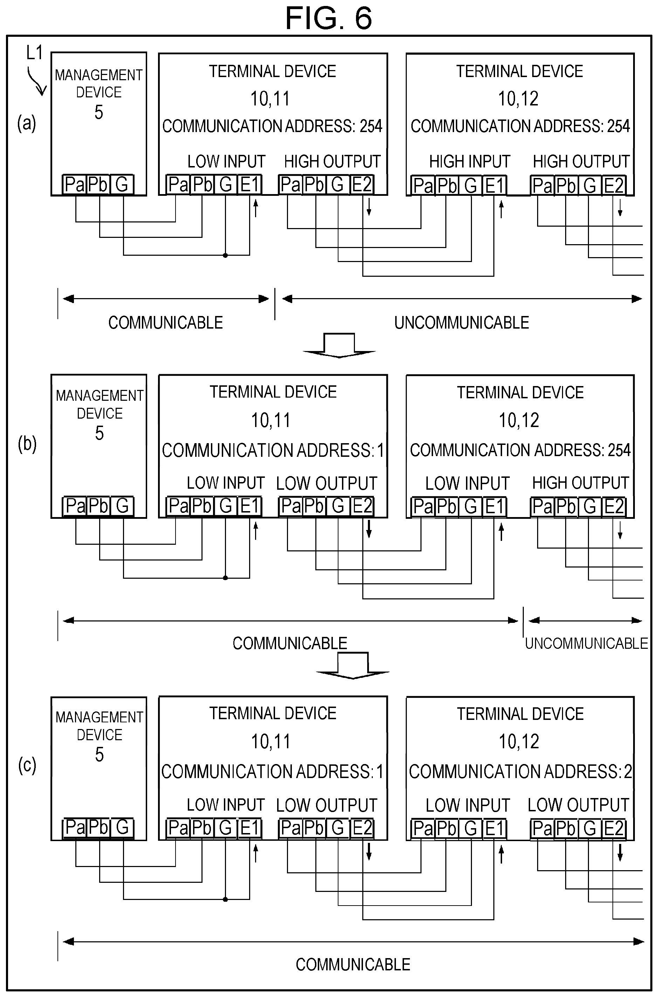

A setting example of the communication address will be described with reference to Fig. 6.

Fig. 6 is a diagram illustrating a setting example of a communication address of terminal device 10 according to the exemplary embodiment.

In the drawing, management device 5, terminal device 11, and terminal device 12 included in communication system 1 are illustrated.

As illustrated in (a) of Fig. 6, input terminal E1 of terminal device 11 is at the ground potential. In this case, only management device 5 and terminal device 11 can communicate with each other. Since the setting of the communication address of terminal device 11 is not completed, terminal device 11 outputs a high signal from output terminal E2 to input terminal E1 of terminal device 12. As a result, terminal device 12 located downstream (rear-stage side) of terminal device 11 cannot communicate with management device 5, that is, cannot set the communication address.

Terminal device 11 communicates with management device 5 using the initially set communication address of "254". Terminal device 11 receives the address change command for the communication address "254" and the communication address transmitted from management device 5, and sets the transmitted communication address as its own communication address. In this example, a communication address "1" transmitted from management device 5 is set in terminal device 11. When the setting of the communication address is completed, terminal device 11 outputs a low signal to input terminal E1 of next terminal device 12 via output terminal E2.

When the potential of input terminal E1 of terminal device 12 is low, as illustrated in (b) of Fig. 6, only management device 5, terminal device 11, and terminal device 12 can communicate with each other. Since the setting of the communication address of terminal device 12 is not completed, the terminal device 12 outputs a high signal from output terminal E2 to input terminal E1 of terminal device 13. As a result, terminal device 13 located downstream of terminal device 12 cannot communicate with management device 5, that is, cannot set the communication address.

Terminal device 12 communicates with management device 5 using the initially set communication address of "254". Terminal device 12 receives the address change command for the communication address "254" and the communication address transmitted from management device 5, and sets the transmitted communication address as its own communication address. In this example, the communication address "2" transmitted from management device 5 is set to terminal device 12. Since the communication address "1" has already been set, terminal device 11 ignores the address change command transmitted from management device 5. When the setting of the communication address is completed, terminal device 12 outputs a low signal to input terminal E1 of next terminal device 13 via output terminal E2.

When the potential of input terminal E1 of terminal device 13 is low, as illustrated in (c) of Fig. 6, only management device 5, terminal device 11, terminal device 12, and terminal device 13 (not illustrated) can communicate with each other. Thereafter, these operations are repeated according to the number of the plurality of terminal devices 10, and different communication addresses are set to all terminal devices 10.

As described above, the communication address of first terminal device 11 connected to management device 5 is set to "1", and communication addresses are set by the serial number from the communication address, whereby the address management in communication system 1 can be appropriately performed. For example, in management device 5, the communication addresses of all terminal devices 10 are checked, and when the maximum number of the set communication addresses has reached the preset number, it can be determined that the address setting has been completed without any problem. On the other hand, when the maximum number of the set communication addresses has not reached the preset number, it can be determined that a failure has occurred in one of the plurality of terminal devices 10.

### [First modification of exemplary embodiment]

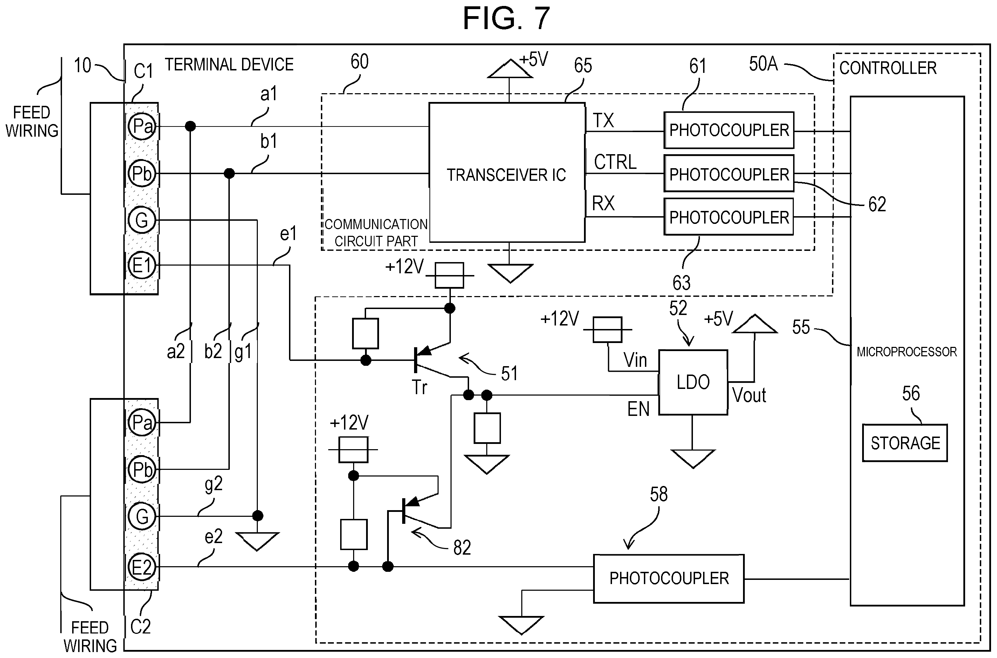

Terminal device 10 according to the first modification of the exemplary embodiment will be described. Fig. 7 is a diagram illustrating a circuit configuration of terminal device 10 according to the first modification of the exemplary embodiment. In the first modification, transistor 82 is arranged instead of arranging diode 81 in the circuit of terminal device 10. Transistor 82 is an example of a semiconductor element having a pn junction.

Terminal device 10 of the first modification includes connectors C1 and C2 connected to the feed wiring, communication circuit part 60, controller 50A, and transistor 82 that can be a bypass circuit.

The configurations of connectors C1 and C2 and communication circuit part 60 of the first modification are substantially similar to those of the exemplary embodiment. Also in the first modification, similarly to the exemplary embodiment, controller 50A controls communication possibility of communication circuit part 60 by switching presence or absence of supply of the drive voltage to transceiver IC 65 of communication circuit part 60.

In the first modification, transistor 82 is used instead of diode 81 of the exemplary embodiment. In addition, transistor 82 of the first modification is not directly connected to input terminal E1, but is connected to input terminal E1 via logic circuit 51. Transistor 82 is, for example, a PNP transistor.

Controller 50A includes logic circuit 51, linear regulator 52, microprocessor 55, and voltage signal switching circuit 58.

Logic circuit 51 is, for example, a logic inversion circuit including a bipolar transistor such as PNP transistor Tr. The emitter of PNP transistor Tr is connected to a predetermined voltage source (12V), and the base is connected to input terminal E1. The base and the emitter are connected to each other via a resistance element. The collector of PNP transistor Tr is connected to the ground via the resistance element, and is connected to enable terminal EN of linear regulator 52. The collector of PNP transistor Tr of the first modification is connected to transistor 82 that can be a bypass circuit.

As illustrated in Fig. 7, the emitter of transistor 82 which is a PNP transistor is connected to a predetermined voltage source (12V), and the base is connected to a path connecting voltage signal switching circuit 58 and output terminal E2. The collector of transistor 82 is connected to the collector of PNP transistor Tr of logic circuit 51. That is, one end of transistor 82 is connected to input terminal E1 via PNP transistor Tr, and the other end is connected to output terminal E2.

In terminal device 10 of the present modification, in a case where the setting of the communication address is completed, when the potential becomes low in the ON state of voltage signal switching circuit 58, transistor 82 is turned on, the drive voltage is output from linear regulator 52 to transceiver IC 65, and controller 50A can operate communication circuit part 60. Therefore, even if a problem such as a failure in turning on the power of terminal device 10 in the preceding stage occurs and a signal is not input to input terminal E1, communication with management device 5 can be performed via terminal device 10 in the preceding stage. As a result, for example, even if a failure occurs in a predetermined terminal device among the plurality of terminal devices 10, it is possible to communicate with the next terminal device connected to the predetermined terminal device.

Note that an example in which a PNP transistor is used as transistor 82 has been described above, but the present invention is not limited thereto. For example, the circuit including transistor 82 may be realized by another circuit using an NPN transistor.

### [Second modification of exemplary embodiment]

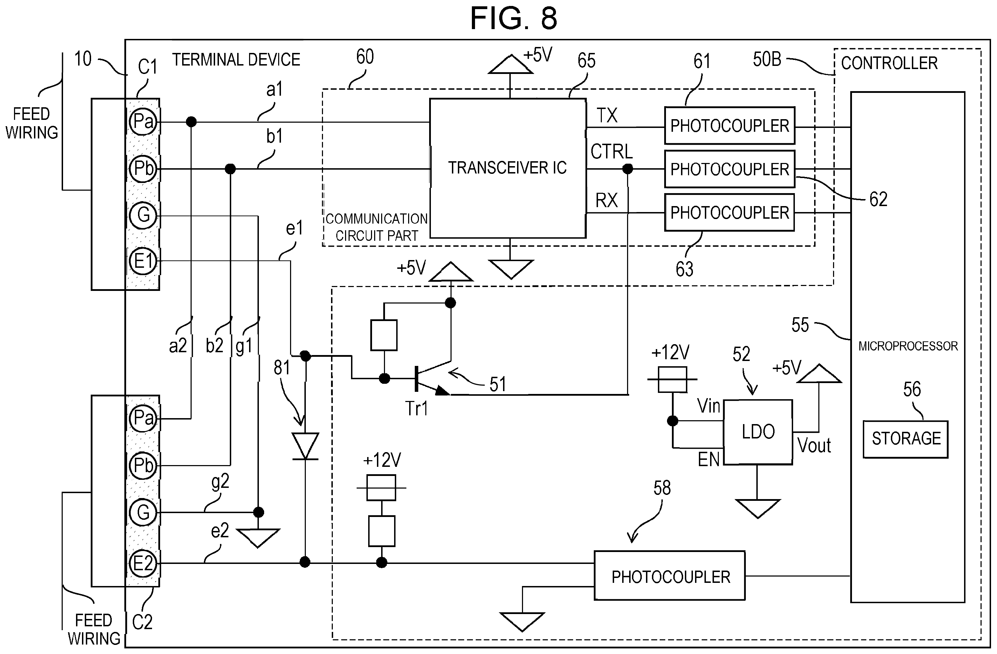

Terminal device 10 according to a second modification of the exemplary embodiment will be described. Fig. 8 is a diagram illustrating a circuit configuration of terminal device 10 according to the second modification of the exemplary embodiment. In the second modification, communication possibility of communication circuit part 60 is controlled by switching a control signal for controlling transmission and reception of transceiver IC 65.

Terminal device 10 of the second modification includes connectors C1 and C2 connected to the feed wirings, communication circuit part 60, controller 50B, and diode 81 that can be a bypass circuit.

The configurations of connectors C1 and C2, communication circuit part 60, and diode 81 of the second modification are substantially similar to those of the exemplary embodiment.

Controller 50B includes logic circuit 51, linear regulator 52, microprocessor 55, and voltage signal switching circuit 58. Enable terminal EN of linear regulator 52 of the second modification is connected to a predetermined voltage source, and a drive voltage is always supplied to transceiver IC 65.

Logic circuit 51 is, for example, a circuit including a bipolar transistor such as NPN transistor Tr1. The base of NPN transistor Tr1 is connected to input terminal E1. The base and the collector of NPN transistor Tr1 are connected to each other via a resistance element. The collector is connected to a predetermined voltage source (5V).

In the second modification, the emitter of NPN transistor Tr1 is connected to a path connecting the control terminal of transceiver IC 65 and photocoupler 62.

For example, when the connection state of input terminal E1 is open or the potential is high, NPN transistor Tr1 is turned on, and the control terminal of transceiver IC 65 becomes high. As a result, transceiver IC 65 enters the transmission mode, and communication circuit part 60 cannot perform reception. That is, in terminal device 10, the communication address cannot be set.

On the other hand, when the potential of input terminal E1 is low, NPN transistor Tr1 is turned off, and the control terminal of transceiver IC 65 becomes low. As a result, transceiver IC 65 can perform transmission and reception (at least can perform reception) on the basis of the control signal output from microprocessor 55. That is, in terminal device 10, the communication address can be set.

As described above, by controlling communication possibility of communication circuit part 60, the communication address transmitted from management device 5 can be set as the communication address of terminal device 10.

In addition, in terminal device 10 of the present modification, voltage signal switching circuit 58 and logic circuit 51 are connected via diode 81. Therefore, in a case where the setting of the communication address is completed, when the potential becomes low in the ON state of voltage signal switching circuit 58, the input voltage of logic circuit 51 becomes low through diode 81, and controller 50B can operate communication circuit part 60. Therefore, even if a problem such as a failure in turning on the power of terminal device 10 in the preceding stage occurs and a signal is not input to input terminal E1, communication with management device 5 can be performed via terminal device 10 in the preceding stage. As a result, for example, even if a failure occurs in a predetermined terminal device among the plurality of terminal devices 10, it is possible to communicate with the next terminal device connected to the predetermined terminal device.

Note that, although an example in which NPN transistor Tr1 is used for logic circuit 51 has been described above, the present invention is not limited thereto. For example, logic circuit 51 may be realized by another circuit using a PNP transistor.

### [Third modification of exemplary embodiment]

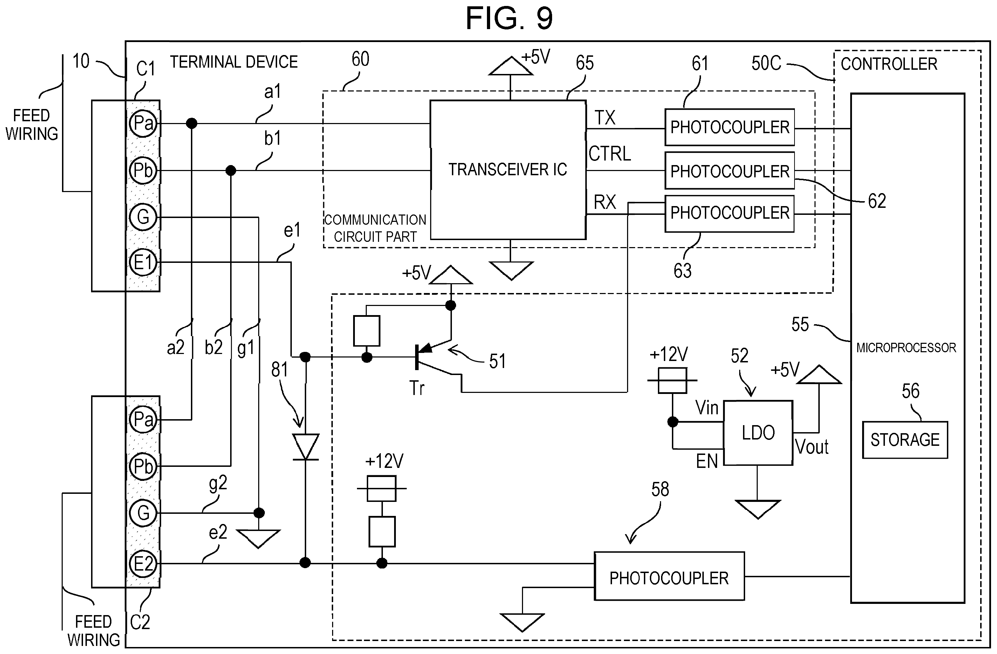

Terminal device 10 according to a third modification of the exemplary embodiment will be described. Fig. 9 is a diagram illustrating a circuit configuration of terminal device 10 according to the third modification of the exemplary embodiment. In the third modification, the communication possibility of communication circuit part 60 is controlled by switching operation possibility of photocoupler 63 connected to the reception terminal of transceiver IC 65.

Terminal device 10 of the third modification includes connectors C1 and C2 connected to the feed wirings, communication circuit part 60, controller 50C, and diode 81 that can be a bypass circuit.

The configurations of connectors C1 and C2, communication circuit part 60, and diode 81 of the third modification are substantially similar to those of the exemplary embodiment.

Controller 50C includes logic circuit 51, linear regulator 52, microprocessor 55, and voltage signal switching circuit 58. Enable terminal EN of linear regulator 52 of the third modification is connected to a predetermined voltage source, and a drive voltage is always supplied to transceiver IC 65.

Logic circuit 51 is, for example, a logic inversion circuit including a bipolar transistor such as PNP transistor Tr. The emitter of PNP transistor Tr is connected to a predetermined voltage source (for example, 5V), and the base of PNP transistor Tr is connected to input terminal E1. The base and the emitter of PNP transistor Tr are connected to each other via a resistance element. The collector of PNP transistor Tr is connected to a switch element disposed on a path connecting the reception terminal of transceiver IC 65 and the light emitting element of photocoupler 62.

For example, when the connection state of input terminal E1 is open or the potential is high, the potential of the collector of PNP transistor Tr remains low. As a result, the communication signal output from the reception terminal of transceiver IC 65 toward microprocessor 55 is cut off by photocoupler 63, and communication circuit part 60 becomes uncommunicable. That is, in terminal device 10, the communication address cannot be set.

On the other hand, when the potential of input terminal E1 is low, the potential of the collector of PNP transistor Tr becomes high. As a result, the communication signal output from the reception terminal of transceiver IC 65 toward microprocessor 55 is not cut off by photocoupler 63, and communication circuit part 60 becomes communicable. That is, in terminal device 10, the communication address can be set.

As described above, by controlling communication possibility of communication circuit part 60, the communication address transmitted from management device 5 can be set as the communication address of terminal device 10.

In addition, in terminal device 10 of the present modification, voltage signal switching circuit 58 and logic circuit 51 are connected via diode 81. Therefore, in a case where the setting of the communication address is completed, when the potential becomes low in the ON state of voltage signal switching circuit 58, the input voltage of logic circuit 51 becomes low through diode 81, and controller 50C can operate communication circuit part 60. Therefore, even if a problem such as a failure in turning on the power of terminal device 10 in the preceding stage occurs and a signal is not input to input terminal E1, communication with management device 5 can be performed via terminal device 10 in the preceding stage. As a result, for example, even if a failure occurs in a predetermined terminal device among the plurality of terminal devices 10, it is possible to communicate with the next terminal device connected to the predetermined terminal device.

### (Conclusion)

Hereinafter, a terminal device according to one aspect of the present disclosure and a communication system according to another aspect of the present disclosure will be exemplified.

Terminal device 10 of Example 1 is a terminal device in which a communication address is set. Terminal device 10 includes communication terminals Pa, Pb to and from which communication signals for performing communication with management device 5 are input and output, communication circuit part 60 connected to communication terminals Pa, Pb, input terminal E1 and output terminal E2, controller 50, 50A, 50B, or 50C connected to each of communication circuit part 60, input terminal E1, and output terminal E2, and diode 81 or transistor 82 disposed on a path connecting input terminal E1 and output terminal E2. Controller 50, 50A, 50B, or 50C controls the operation of communication circuit part 60 on the basis of the signal input to input terminal E1, and then outputs a predetermined signal via output terminal E2.

As described above, by arranging diode 81 or transistor 82 on the path connecting input terminal E1 and output terminal E2, terminal device 10 can operate communication circuit part 60 by itself even if a problem such as a failure in turning on the power of terminal device 10 in the preceding stage occurs. As a result, even if a failure occurs in a predetermined terminal device among the plurality of terminal devices 10, it is possible to communicate with the next terminal device connected to the predetermined terminal device.

Terminal device 10 of Example 2 is the terminal device described in Example 1, and diode 81 is connected in parallel to the controller. The anode of diode 81 may be connected to input terminal E1, and the cathode may be connected to output terminal E2.

As described above, by connecting diode 81 in parallel to the controller, terminal device 10 can operate communication circuit part 60 by itself even if a problem such as a failure in turning on the power of terminal device 10 in the preceding stage occurs. As a result, even if a failure occurs in a predetermined terminal device among the plurality of terminal devices 10, it is possible to communicate with the next terminal device connected to the predetermined terminal device.

Terminal device 10 of Example 3 is the terminal device described in Example 1 or 2, and the controller may control the operation of communication circuit part 60 to acquire the communication address transmitted from management device 5 via communication circuit part 60 and set the communication address as the communication address of terminal device 10.

In this manner, the controller acquires the communication address transmitted from management device 5 and sets the communication address as the communication address of terminal device 10, whereby the communication address can be appropriately set for each of the plurality of terminal devices 10.

Terminal device 10 of Example 4 is the terminal device described in Example 3, and a signal for permitting or prohibiting the setting of the communication address is input to input terminal E1. The controller may enable communication by communication circuit part 60 in a case where the signal is a voltage signal that permits setting of the communication address, and may disable communication by communication circuit part 60 in a case where the signal is a voltage signal that prohibits setting of the communication address.

As described above, by enabling or disabling communication by communication circuit part 60 according to the voltage signal, individual communication addresses can be set for each of the plurality of terminal devices 10.

Terminal device 10 of Example 5 is the terminal device described in Example 3 or 4, and the controller may output a signal permitting the setting of the communication address via output terminal E2 when the setting of the communication address is completed, and may output a signal prohibiting the setting of the communication address via output terminal E2 when the setting of the communication address is not completed.

In this manner, by outputting a signal for permitting or prohibiting the setting of the communication address via output terminal E2 according to whether or not the setting of the communication address has been completed, it is possible to set an individual communication address for each of the plurality of terminal devices 10.

Terminal device 10 of Example 6 is the terminal device described in Example 4 or 5, the signal prohibiting the setting of the communication address may be a signal indicating a predetermined logic state having a predetermined voltage value, and the signal permitting the setting of the communication address may be a signal indicating a logic state inverted from the predetermined logic state.

As described above, the communication address can be easily set for each of the plurality of terminal devices 10 by selectively using the signal indicating the predetermined logic state and the signal indicating the logic state inverted from the predetermined logic state.

Terminal device 10 of Example 7 is the terminal device according to any one of Examples 1 to 6, and further includes storage 56 that stores a communication address set by the controller. The communication address may be held in storage 56 even after terminal device 10 is powered off.

According to this configuration, it is not necessary to set the communication address every time the power is turned on, so that it is possible to reduce labor for setting the communication address.

Terminal device 10 of Example 8 is the terminal device according to any one of Examples 1 to 7, and controller 50 or 50A may control communication possibility of communication circuit part 60 by switching presence or absence of supply of a drive voltage to transceiver IC 65 of communication circuit part 60.

As described above, by controlling communication possibility of communication circuit part 60, the communication address transmitted from management device 5 can be set as the communication address of terminal device 10.

Terminal device 10 of Example 9 is the terminal device according to any one of Examples 1 to 7, and controller 50B may control communication possibility of communication circuit part 60 by switching a control signal for controlling transmission and reception of transceiver IC 65 of communication circuit part 60.

As described above, by controlling communication possibility of communication circuit part 60, the communication address transmitted from management device 5 can be set as the communication address of terminal device 10.

Terminal device 10 of Example 10 is the terminal device according to any one of Examples 1 to 7, and controller 50C may control communication possibility of communication circuit part 60 by switching operation possibility of the light emitting element of photocoupler 63 connected to the reception terminal of transceiver IC 65 of communication circuit part 60.

As described above, by controlling communication possibility of communication circuit part 60, the communication address transmitted from management device 5 can be set as the communication address of terminal device 10.

Communication system 1 of Example 11 is a communication system including a plurality of terminal devices 10 and management device 5. The plurality of terminal devices 10 include at least first terminal device 11, second terminal device 12, and third terminal device 13, and are bus-connected to management device 5 via respective communication terminals Pa, Pb. Input terminal E1 of first terminal device 11 is connected to management device 5. Output terminal E2 of first terminal device 11 is connected to input terminal E1 of second terminal device 12. Output terminal E2 of second terminal device 12 is connected to input terminal E1 of third terminal device 13.

In this configuration, the communication address can be appropriately set for each of terminal devices 11 to 13 by using management device 5 and terminal devices 11 to 13.

### (Other exemplary embodiments)

Although the exemplary embodiment and the modifications of the exemplary embodiment have been described above, the present disclosure is not limited to the exemplary embodiment and the modifications.

For example, terminal device 10 of the exemplary embodiment may be a communication device itself. Communication system 1 in this case may be configured such that management device 5 controls the main body of the drive device or the main body of the electric device via terminal device 10. Further, terminal device 10 may be an address setting device having only a function of setting a communication address.

In the above exemplary embodiment, the example in which voltage signal switching circuit 58 is provided outside microprocessor 55 has been described, but the present invention is not limited thereto, and voltage signal switching circuit 58 may be provided inside microprocessor 55.

In the above exemplary embodiment, the terminal device capable of setting the communication address to another terminal device different from a predetermined terminal device even if a failure occurs in the predetermined terminal device has been exemplified, but the present invention is not limited thereto, and the terminal device may be provided as a device capable of easily setting the communication address.

In this case, for example, the terminal device may include: a communication terminal to and from which a communication signal for communicating with the management device is input and output; a communication circuit part connected to the communication terminal; an input terminal and an output terminal; and a controller connected to each of the communication circuit part, the input terminal, and the output terminal, and configured to output a predetermined signal via the output terminal after controlling operation of the communication circuit part on the basis of a signal input to the input terminal. The controller may be a device that acquires a communication address transmitted from the management device via the communication circuit part by controlling operation of the communication circuit part, and sets the communication address as a communication address of the terminal device.

Although the example in which the communication address is set to each terminal device 10 has been described in the above exemplary embodiment, the association between the communication address and the arrangement position of each terminal device 10 may be separately performed after the setting of the communication address. For example, by outputting a control signal including a predetermined communication address from management device 5 and turning on a pilot lamp or the like provided in predetermined terminal device 10, it is possible to associate the communication address and the arrangement position of each terminal device 10.

In the above exemplary embodiments, each component such as the control device may be configured with dedicated hardware, or implemented by executing a software program suitable for each component. Each component may be implemented by a program execution part such as a central processing unit (CPU) or a processor reading and executing a software program recorded in a recording medium such as a hard disk or a semiconductor memory.

Each component may be a circuit (or an integrated circuit). The plurality of components may constitute one circuit as a whole or may be separate circuits. Each of the circuits may be a general-purpose circuit or a dedicated circuit.

A comprehensive or specific aspect of the present disclosure may be implemented by a system, an apparatus, a method, an integrated circuit, a computer program, or a non-transitory recording medium such as a computer-readable CD-ROM. In addition, the present invention may be realized by an arbitrary combination of a system, an apparatus, a method, an integrated circuit, a computer program, and a non-transitory recording medium. For example, the present disclosure may be realized as a program for causing a computer to execute control performed by a control device or the like included in each component of a communication system.

The order of the plurality of processes in the operation of the communication system described in the above exemplary embodiment is an example. The order of the plurality of processes may be changed, or the plurality of processes may be executed in parallel.

In addition, the present disclosure also includes a mode obtained by applying various modifications conceived by those skilled in the art to each exemplary embodiment, or a mode achieved by optionally combining components and functions in each exemplary embodiment within a range not departing from the gist of the present disclosure.

### INDUSTRIAL APPLICABILITY

The terminal device and the communication system of the present disclosure can set the communication address to another terminal device different from a predetermined terminal device even if a failure occurs in the predetermined terminal device among the plurality of terminal devices. As described above, the terminal device and the communication system of the present disclosure are industrially useful.

### REFERENCE MARKS IN THE DRAWINGS

1: communication system
5: management device
10, 11, 12, 13, 14, 15: terminal device
50, 50A, 50B, 50C: controller
51: logic circuit
52: linear regulator
55: microprocessor
56: storage
58: voltage signal switching circuit
60: communication circuit part
61, 62, 63: photocoupler
65: transceiver IC
81: diode
82: transistor
a1, a2, b1, b2, g1, g2, e1, e2: internal wiring
C1, C2: connector
E1: input terminal
E2: output terminal
G: ground terminal
L1, L2, L3, L4, L5: feed wiring
Pa, Pb: communication terminal
Tr: PNP transistor
Tr1: NPN transistor

## Claims

1. A terminal device to which a communication address is set, the terminal device comprising:
a communication terminal to and from which a communication signal for communicating with a management device is input and output;
a communication circuit part connected to the communication terminal;
an input terminal and an output terminal;
a controller connected to each of the communication circuit part, the input terminal, and the output terminal, and configured to output a predetermined signal via the output terminal after controlling operation of the communication circuit part on a basis of a signal input to the input terminal; and
a diode or transistor disposed on a path connecting the input terminal and the output terminal.

2. The terminal device according to Claim 1, wherein
the diode is connected in parallel to the controller, and
an anode of the diode is connected to the input terminal, and a cathode is connected to the output terminal.

3. The terminal device according to Claim 1, wherein the controller acquires the communication address transmitted from the management device via the communication circuit part by controlling operation of the communication circuit part, and sets the communication address as a communication address of the terminal device.

4. The terminal device according to Claim 3, wherein
a signal permitting or prohibiting setting of the communication address is input to the input terminal, and
the controller enables communication by the communication circuit part when the signal is a voltage signal that permits setting of the communication address, and disables communication by the communication circuit part when the signal is a voltage signal prohibiting setting of the communication address.

5. The terminal device according to Claim 3, wherein the controller outputs a signal permitting setting of the communication address via the output terminal when setting of the communication address is completed, and outputs a signal prohibiting setting of the communication address via the output terminal when setting of the communication address is not completed.

6. The terminal device according to Claim 4 or 5, wherein the signal prohibiting setting of the communication address is a signal indicating a predetermined logic state having a predetermined voltage value, and the signal permitting setting of the communication address is a signal indicating a logic state inverted from the predetermined logic state.

7. The terminal device according to any one of Claims 1 to 5, further comprising a storage that stores the communication address set by the controller,
wherein the communication address is held in the storage even after the terminal device is powered off.

8. The terminal device according to any one of Claims 1 to 5, wherein the controller controls communication possibility of the communication circuit part by switching presence or absence of supply of a drive voltage to a transceiver integrated circuit of the communication circuit part.

9. The terminal device according to any one of Claims 1 to 5, wherein the controller controls communication possibility of the communication circuit part by switching a control signal for controlling transmission and reception of a transceiver integrated circuit of the communication circuit part.

10. The terminal device according to any one of Claims 1 to 5, wherein the controller controls communication possibility of the communication circuit part by switching operation possibility of a photocoupler connected to a reception terminal of a transceiver integrated circuit of the communication circuit part.

11. A communication system, comprising:
a plurality of terminal devices each of which is the terminal device according to any one of Claims 1 to 5; and
the management device,
wherein the plurality of terminal devices include at least a first terminal device, a second terminal device, and a third terminal device, each of which is the terminal device, and are bus-connected to the management device via respective communication terminals of the first terminal device, the second terminal device, and the third terminal device, the respective communication terminals each being the communication terminal,
the input terminal of the first terminal device is connected to the management device,
the output terminal of the first terminal device is connected to the input terminal of the second terminal device; and
the output terminal of the second terminal device is connected to the input terminal of the third terminal device.
